# EUROPÄISCHE PATENTSCHRIFT

(11) **EP 0 550 849 B1**
(45) Veröffentlichungstag und Bekanntmachung des Hinweises auf die Patenterteilung: **28.08.1996**
(21) Anmeldenummer: 92121132.2
(22) Anmeldetag: 11.12.1992
(51) Int. Cl.: B60T 8/32, B60T 8/26

(54) **Verfahren zur Bremskraftregelung von Motorrädern**
Method for controlling the brake force of motorbikes
Procédé pour contrôler la force de freinage de motocyclettes

(30) Priorität: 10.01.1992 DE 4200440
(43) Veröffentlichungstag der Anmeldung: 14.07.1993
(73) Patentinhaber: Fahrzeugtechnik Ebern GmbH, D-96106 Ebern (DE); Bayerische Motoren Werke Aktiengesellschaft, 80788 München (DE)
(72) Erfinder: Roll, Georg, Dr., W-6056 Heusenstamm (DE); Ohm, Heinz-F., W-6108 Weiterstadt (DE); Hauser, Berthold, W-8091 Jakobneuharting (DE)
(74) Vertreter: Oppermann, Ewald, Dipl.-Ing.

(56) Entgegenhaltungen:
- EP-A- 0 149 137
- EP-A- 0 445 575
- DE-A- 3 422 837
- GB-A- 2 134 200

## Beschreibung

Die Erfindung betrifft ein Verfahren zur Bremskraftregelung von Motorrädern.

In der nicht vorveröffentlichten Patentanmeldung DE-A-4.134.675 der Anmelderin ist ein derartiges Verfahren beschrieben, mit dem das Kippen abhebegefährdeter Fahrzeuge (speziell Motorräder) bei hoher Verzögerung erkannt und ausgeregelt wird.

Dabei wird der Vorderradbremsdruck nach einer vorgegebenen Zeitfunktion immer dann reduziert, wenn aufgrund bestimmter permanent geprüfter Radgeschwindigkeitsmuster ein Abhebevorgang erkannt worden ist. Wenn das jeweilige Geschwindigkeitsmuster nicht mehr auf Abheben hindeutet, wird der Vorderradbremsdruck nach einer weitgehend voreingestellten Wiederbelastungsfunktion wieder aufgebaut, wobei diese Funktion so gewählt ist, daß der mittlere Bremsdruck über den Wiederbelastungszeitraum einerseits möglichst groß ist und zum anderen nicht sofort wieder ein Abheben oder ein überbremsungsbedingter Vorderradgeschwindigkeitseinbruch stattfindet.

Unter ungünstigen Bedingungen kann dieser Regelmechanismus dazu führen, daß durch systembedingte Druckanfahrt zyklisch immer wieder ein Abhebefall provoziert wird. Die dabei auftretenden starken Druckmodulationen führen besonders im unteren Geschwindigkeitsbereich zu schlechtem Regelungskomfort. Zudem regen die starken Druckgradienten in negativer und positiver Richtung ein Wippverhalten des Fahrzeugs an, wodurch der Fahrzeugschwerpunkt phasenweise weit nach vorn und oben verlagert wird, was zu erneuten Abhebesituationen führt, auch wenn die Fahrzeugverzögerung noch weit vom Maximum entfernt liegt.

Um diese selbsterzeugten Abhebefälle zu vermeiden, ist es wünschenswert, das Fahrzeug vor allem im unteren Geschwindigkeitsbereich ruhig zu halten und es ganz vorsichtig an den optimalen Verzögerungspunkt heranzuführen. Dies gelingt aber nur dann, wenn ein zyklisches Abheben generell vermieden wird.

Es ist deshalb Aufgabe der Erfindung, ein Verfahren zur Bremskraftregelung von Motorrädern aufzuzeigen, das die vorgenannten Nachteile vermeidet und mit einfachen Mitteln ein komfortables Bremsverhalten bei hoher Fahrzeugverzögerung ermöglicht.

Die Lösung dieser Aufgabe erfolgt mit den im Anspruch 1 angegebenen Merkmalen. Vorteilhafte Weiterentwicklungen sind in den Ansprüchen 2 bis 7 angegeben.

Die vorliegende Erfindung beruht also auf einem ergänzend wirkenden Regelmechanismus, der auf der Basis einer zuvor erkannten Abhebesituation arbeitet und in der Lage ist, weitere Abhebefälle während dieser Bremsung mit hoher Sicherheit zu vermeiden.

Da dieser Regelmechanismus zur fahrzeugberuhigung führt, wird nicht nur der Bremskomfort sondern auch die erreichte Fahrzeugverzögerung erhöht, da keine starken Druckmodulationen mehr erforderlich sind, die im zeitlichen Mittel praktisch immer schlechte Verzögerungswerte erzielen.

Die entwickelten Regelmechanismen können als Ergänzung zu einem Standard-ABS-Regler angesehen werden. Bei einer Integration in ein derartiges System können verschiedene Signale, die der ABS-Regler ohnehin berechnet, mitgenutzt werden.

Die Erfindung soll an einem Ausführungsbeispiel erläutert werden.

Es zeigen:
- Figur 1:: Blockschaltbild eines Antiblockiersystems mit Abhebe-Erkennungs- und - Ausregelungsmechanismus sowie zusätzlichem Abhebe-Verhinderer
- Figur 2:: Zeitdiagramm einer Regelbremsung mit Abhebe-Ausregelung nach DE-A-4.134.675
- Figur 3:: Zeitdiagramm einer Regelbremsung mit langsamer Druckanfahrt
- Figur 4:: Funktion für die maximal zulässige Verzögerungszunahme
- Figur 5:: Schaltungstechnische Realisierung des Abhebe-Verhinderers
- Figur 6:: Zeitdiagramm einer Regelbremsung mit Abhebe-Verhinderer

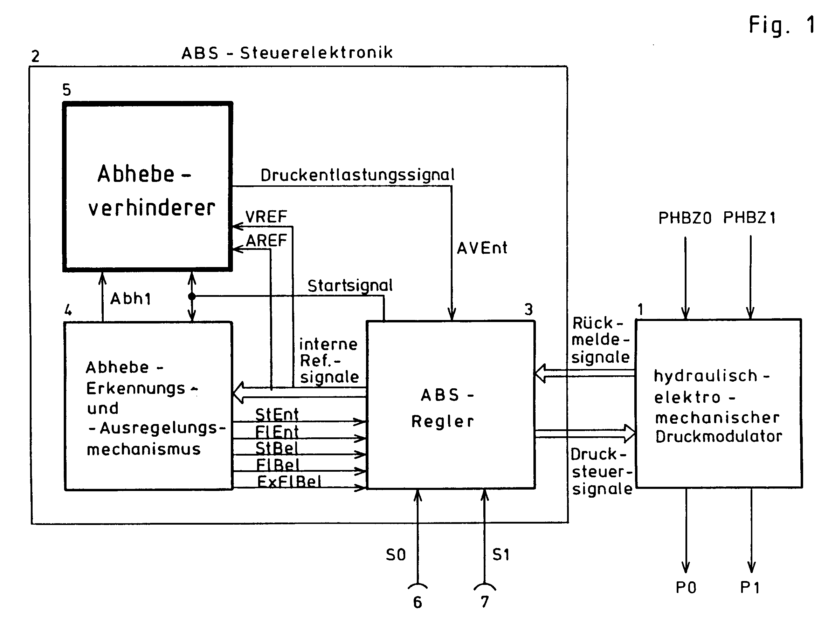

Figur 1 zeigt ein Blockschaltbild eines Antiblockiersystems, bestehend aus einem hydraulisch-elektro-mechanischen Druckmodulator 1 und einer elektronischen Steuereinheit 2, die neben den Komponenten für den ABS-Regler 3 noch einen Abhebe-Erkennungs- und -Ausregelungsmechanismus 4 sowie den erfindungsgemäßen Abhebeverhinderer 5 beinhaltet. Die Realisierung dieser Funktionsblöcke 3, 4, 5 kann sowohl durch Spezial-Hardware als auch durch eine sofrtwaremäßige Implementierung erfolgen.

Um die Einbindung des Abhebeverhinderers in ein normales Antiblockiersystem darzustellen, werden nachfolgend kurz die funktionalen Zusammenhänge der Blöcke 1, 3, 4, 5 beschrieben. Der ABS-Regler 3 bekommt von den induktiven Radsensoren 6, 7 Impulsfolgen S0 und S1, aus deren Frequenzen er direkt die realen Umfangsgeschwindigkeiten VO und V1 der beiden Räder des Motorrads berechnet. Aus VO und V1 ermittelt der ABS-Regler weitere interne Referenzsignale, wie beispielsweise die Fahrzeugreferenzgeschwindigkeit VREF und die Fahrzeugreferenzverzögerung AREF, damit er Überhremsungszustände erkennen und sicher ausregeln kann. Im Eintrittsfall, also bei Blockiergefahr, gibt der ABS-Regler 3 Drucksteuersignale an den Druckmodulator 1, so daß dieser die vom Fahrer vorgegebenen Hauptbremszylinderdrücke PHBZO und PHBZ1 reduziert und als Radbremszylinderdrücke PO und P1 zu den beiden Radbremskreisen weiterleitet. Der hier zugrundegelegte Druckmodulator gibt Rückmeldesignale an den ABS-Regler; es handelt sich dabei um Informationen über die eingestellten Bremsdrücke, PO und P1, also im Falle eines Plunger-Druckmodulators (s. DE-OS 35 30 280) um die druckbestimmenden Positionen der Tauchkolben.

Die internen Referenzsignale können nun von zusätzlichen Komponenten der Steuerelektronik 4, 5, mitgenutzt werden. Der Abhebe-Erkennungs- und -Ausregelungsmechanismus 4 erkennt anhand dieser Signale, ob ein Abhebefall vorliegt und teilt dem ABS-Regler in den verschiedenen Phasen der Ausregelung anhand der Steuersignale StEnt, FlEnt, StBel, FlBel und ExFlBel mit, welche Druckmodulation jeweils erforderlich ist. Der ABS-Regler generiert daraus die modulatorspezifischen Drucksteuersignale.

ABS-Regler 3 und Abhebemechanismus 4 arbeiten also parallel: Wenn eine Überbremsungssituation eintritt, übernimmt der ABS-Regler die Kontrolle und regelt die Bremsdrücke durch entsprechende Ansteuerung des Druckmodulators. Im Falle eines erkannten Fahrzeugabhebens geht die Kontrolle an den Abhebemechanismus, der den ABS-Regler als Schnittstelle benutzt, um den Druckmodulator anzusteuern. So wird der Abhebemechanismus mit minimalem Aufwand realisiert.

Ebenso verhält es sich mit dem Abhebeverhinderer 5, der als weitere parallel zum ABS-Regler und Abhebemechanismus wirkende Komponente angesehen werden kann.

Der Abhebeverhinderer 5 nutzt ebenfalls teilweise die vom ABS-Regler bereitgestellten internen Referenzsignale (hier speziell VREF und AREF) sowie ein Startsignal, das dem Abhebeverhinderer 5 Start einer ABS-Regelbremsung zwecks Dateninitialisierung anzeigt.

Zusätzlich erhält der Abhebeverhinderer 5 vom Abhebemechanismus 4 ein Signal Abh1, das anzeigt, daß ein gravierender Abhebefall vorliegt.

Um ebenfalls Einfluß auf die Druckmodulation nehmen zu können, führt der Abhebeverhinderer 5 das Signal AVEnt an den ABS-Regler 3 und veranlaßt diesen zu einer Druckentlastung um einen festen Betrag, wenn AVEnt logisch '1' ist.

### Wirkungsweise des Abhebe-Verhinderers

### Erläuterung der Variablen und Konstanten:

- SO: Signal vom induktiven Vorderradsensor, das eine Bestimmung der aktuellen Vorderrad-Umfangsgeschwindigkeit ermöglicht
- S1: Signal vom induktiven Hinterradsensor, das eine Bestimmung der aktuellen Hinterrad-Umfangsgeschwindigkeit ermöglicht
- VO: Vorderrad-Momentangeschwindigkeit (aus den Radsensorsignalen bildet ein ABS-Regler in jedem Regelungszyklus die momentane Radumfangsgeschwindigkeit
- V1: Hinterrad-Momentangeschwindigkeit
- PO: Radbremszylinderdruck am Vorderrad (dieser Druck wird bei der Regelbremsung vom ABS-Regler eingestellt; die hier vorgestellten Mechanismen können indirekt über den ABS-Regler Einfluß auf PO nehmen)
- PO_i: PO zum Zeitpunkt i
- P1: Radbremszylinderdruck am Hinterrad
- PHBZO: Hauptbremszylinderdruck des Vorderradkanals
- PHBZ1: Hauptbremszylinderdruck des Hinterradkanals
- VREF: berechnete Fahrzeugreferenzgeschwindigkeit (wird aus gefilterten Radgeschwindigkeiten und Plausibilitätsüberlegungen gebildet)
- AREF: gefilterte Fahrzeugverzögerung (zeitliche Ableitung von VREF, die aufgrund der kurzen Regelungszykluszeiten allerdings sehr stark schwankt. Aus diesem Grund erfolgt allgemein eine Filterung dieses Signals. AREF wird als eine derartige gefilterte Fahrzeugverzögerung angenommen)
- AREF_i: AREF zum Zeitpunkt i
- AREF_alt: AREF-Wert aus dem vorherigen Regelungszyklus (durch Speicherung von AREF über einen Regelungszyklus wird AREF_alt zur Bildung der Fahrzeugverzögerungszunahme DAREF bereitgestellt)
- DAREF: AREF_alt - AREF
(Fahrzeugverzögerungszunahme von einem Regelungszyklus zum nächsten)
- AREFGrz: AREF zum Zeitpunkt des sicheren Erkennens einer Abhebe-Situation
(dieses Signal wird durch die hier beschriebenen Mechanismen durch Abspeichern von AREF gebildet)
- AREFGrz:
- _Min: Minimalwert von AREFGrz, der noch als hinreichend großer Abhebeverzögerungsert akzeptiert wird
- DAREFMax: Maximal zulässige Fahrzeugverzögerungszunahme, (wird durch den Abhebe-Verhinderer nach einer Funktion aus AREF und AREFGrz gebildet; überschreitet DAREF den Wert von DAREFMax, so wird der ABS-Regler veranlaßt, den Bremsdruck am Vorderradkanal um einen geringen Betrag zu verringern)
- Abh1: gravierender Abhebefall liegt vor (boolesches 1-Bit-Signal, das der Abhebe-Erkennungsmechanismus auf logisch '1' setzt, solange ein Abhebefall vorliegt)
- Startsignal: Startimpuls für die ABS-Regelung (boolesches 1-Bit-Signal, das nur im ersten Zyklus einer jeden ABS-Regelung auf logisch '1' gesetzt wird und in allen anderen Zyklen auf logisch 'O' liegt)
- Regelungszyklustakt: Taktsignal, das mit der Zeitdauer eines ABS-Regelungszyklus (hier 8ms) geschaltet wird > 125 Hz
- AVEEnt: Entlastungssignal vom Abhebeverhinderer (boolesches 1-Bit-Signal, das der Abhebeverhinderer auf logisch '1' setzt, wenn sich eine erneute Abhebesituation während einer Regelbremsung anbahnt; der ABS-Regler reagiert darauf mit einer Druckentlastung am Vorderrad um einen festen Betrag)
- StEnt: Steuersignal an den ABS-Regler: bewirkt eine steile Druckentlastung am Vorderrad
- FlEnt: Steuersignal an den ABS-Regler: bewirkt eine flache Druckentlastung am Vorderrad
- StBel: Steuersignal an den ABS-Regler: bewirkt eine steile Druckwiederbelastung am Vorderrad
- FlBel: Steuersignal an den ABS-Regler: bewirkt eine flache Druckwiederbelastung am Vorderrad
- ExFlBel: Steuersignal an den ABS-Regler: bewirkt eine extrem flache Druckwiederbelastung am Vorderrad
- Tab: Zeitpunkt, zu dem ein Abheben erkannt wird
- Tab_i: Zeitpunkt, zu dem innerhalb einer Regelbremsung zum i-tenmal ein Abheben erkannt wird
- Tein: Zeitpunkt, zu dem ein überbremsungsbedingter Radgeschwindigkeitseinbruch erkannt wird
- Taus: Zeitpunkt, zu dem ein Abheben oder ein Radgeschwindigkeitseinbruch ausgeregelt worden ist
- Taus_i: Zeitpunkt, zu dem innerhalb einer Regelbremsung zum i-tenmal ein Abheben oder ein Radgeschwindigkeitseinbruch ausgeregelt worden ist
- K1,K2: Konstanten für die Berechnung der Funktion: DAREFMax = f (AREF, AREFGrz, VREF)
- 1g: Erdbeschleunigung = 9,81 m/s ²

Wenn während einer ABs-Bremsung bereits ein Abhebefall aufgetreten ist, merkt sich der Abhebe-Verhinderer die zugehörige Fahrzeugreferenzverzögerung AREF, die zum Zeitpunkt des sicheren Erkennes des Abhebens errechnet wurde. Um nicht fälschlicherweise einen zu tiefen Merkpunkt festzuhalten, wird gefordert, daß die gemerkte Verzögerung einen minimalen Grenzwert von beispielsweise 0,7 g überschreiten muß.

Dieser Wert kann fahrzeugspezifisch festgelegt und für weniger abhebegefährdeter Fahrzeuge entsprechend nach oben verschoben werden.

Nach dem Ausregeln des Abhebers sinkt die Verzögerung i.a. auf einen Wert, der etwa um 0,2 - 0,3 g unter der Abhebe-Verzögerung liegt. Beim steilen Wiederanfahren des optimalen Druckpunkts steigt die Fahrzeugverzögerung über der Zeit stark an.

Durch einen zu starken Verzögerungsgradienten wird die Vorderachsgabel des Fahrzeugs mit hoher Dynamik einfedern, wodurch zumindest kurzfristig ein starkes Kippmoment um die Vorderradachse auftritt.

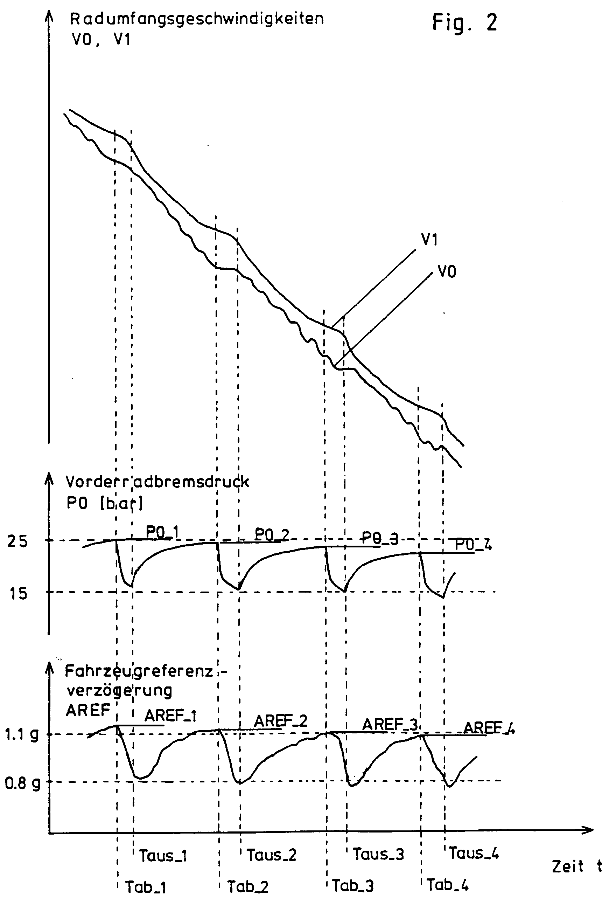

Wie aus Figur 2 ersichtlich ist, kann dieser Vorgang dazu führen, daß das Fahrzeug schon Abhebetendenzen zeigt, bevor der maximal mögliche Verzögerungswert auch nur annähernd erreicht wird:
PO_4 < PO_3 < PO_2 < PO_1
AREF_4 < AREF_3 < AREF_2 < AREF_1

Durch die Unruhe des Fahrzeugs sinken also der einstellbare Vorderradbremsdruck PO und die berechnete Fahrzeugreferenzverzögerung AREF im Laufe einer Bremsung permanent ab.

Selbstverständlich sinkt auch die reale Fahrzeugverzögerung ab, so daß neben den unangenehmen Kipperscheinungen auch eine leichte globale Unterbremsung eintritt.

In der Praxis hat sich gezeigt, daß eine zu starke Zunahme von AREF sehr schnell zum Abheben führt und daher schon direkt als Indiz für einen sich anbahnenden Abhebefall gewertet werden.

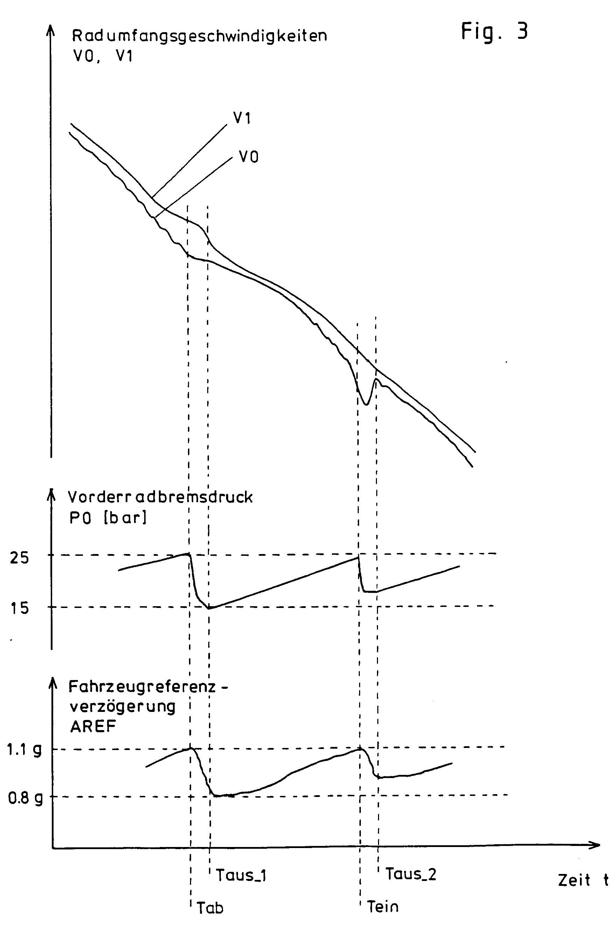

In Figur 3 ist eine Möglichkeit gezeigt, weitere Abhebefälle während einer Regelbremsung durch eine generell langsamere Druckanfahrt zu unterdrücken.

Diese würde allerdings zu deutlichen Unterbremsungszuständen führen, da die vorherige Druckreduzierung zum Ausregeln eines echten Abhebefalls u.U. sehr groß war. Es sollte daher schon eine Druckanfahrt wie in Figur 2 erfolgen, um moglichst schnell wieder am optimalen Punkt zu sein.

Um aber bei einer derartigen Druckanfahrt ein erneutes Abheben schon im Ansatz verhindern zu können, muß die Zunahme der Fahrzeugverzögerung ständig überwacht werden. Falls ein zu großer Gradient auftritt, muß der Druck angehalten oder sogar kurzzeitig reduziert werden, bis der Gradient wieder einen hinreichend kleinen Wert annimmt. Durch den kleinen Gradienten in der Fahrzeugverzögerung wird erreicht, daß das Fahrzeug ganz langsam in die Vorderradachsfeder gedrückt wird, ohne daß ein hektisches Einkippen erfolgt.

Beim langsamen Aufbau der Verzögerung bleibt der Schwerpunkt ruhig und tief, und das Fahrzeug verkraftet enorme Verzögerungswerte. Auch für die eigentliche ABS-Bremsung wirkt sich diese Ruhigstellung positiv aus, da der Vorderradreifen regelrecht mit dem Untergrund 'verzahnen' kann, während bei hektischem Druckaufbau und Kippen des Fahrzeugs die Radaufstandskraft so stark schwankt, daß auch eine vorzeitige Radblockiertendenz eintreten kann, die im 'quasistatischen' Fall der Ruhigstellung noch längst nicht gegeben ist.

Um nun sicher zu sein, daß durch die Ruhigstellung kein Unterbremsen auftritt, wird die gradientenbedingte Druckreduzierung nur dann durchgeführt, wenn die Verzögerung bereits Werte im Bereich des früher gemerkten Abhebe-Verzögerungspunktes angenommen hat, so daß nun mit erneutem Abheben gerechnet werden muß.

Somit läuft eine Vollbremsung eines abhebegefährdeten Fahrzeugs auf gut haftendem Untergrund i.a. folgendermaßen ab:

Zunächst wird mit dem in DE-A-4.134.675 beschriebenen Mechanismus 5 ein Abheben erkannt und ausgeregelt. Der zum Zeitpunkt des Abhebens berechnete Wert der Fahrzeugreferenzverzögerung AREF wird als fahrzeugbeladungsspezifischer Abhebeverzögerungswert AREFGrz abgespeichert, wobei dieser Wert sicherheitshalber einen fest vorgegebenen fahrzeugspezifischen Minimalwert AREFGrz_Min nicht unterschreiten darf.

Im weiteren Verlauf der gesamten Bremsung dient der gespeicherte Wert AREFGrz als für den aktuellen Fahrzeugzustand und die Bodengegebenheiten guter Verzögerungswert, der zwar noch überschritten werden darf, wobei aber gefordert wird, daß die Überschreitung nur mit einer geringen Dynamik erfolgen darf, damit das Fahrzeug ruhig bleibt.

Bei zu starker Verzögerungszunahme im Bereich von AREFGrz wird der Bremsdruck am Vorderradkanal geringfügig reduziert, so daß die Verzögerungszunahme langsamer erfolgt.

Um möglichst schnell ohne Abhebegefahr an den optimalen Druckpunkt zu gelangen, wird der zulässige Verzögerungsgradient DAREFMax als Funktion der bereits erreichten Verzögerung formuliert.

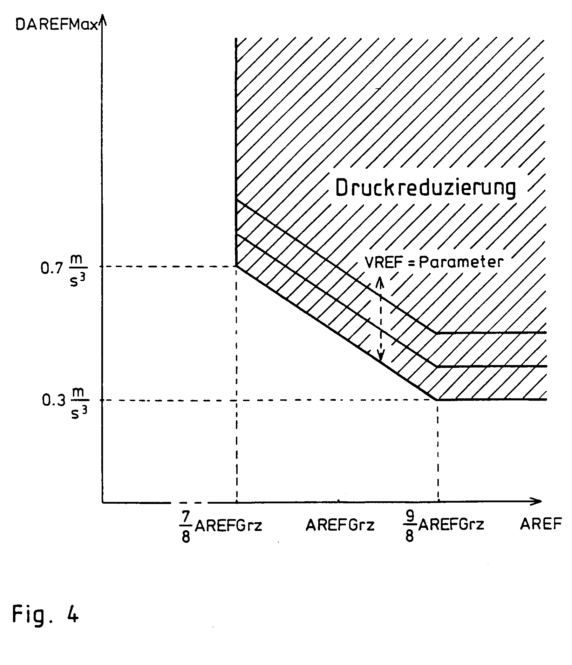

Figur 4 zeigt die Funktion, die besagt, daß beliebige Gradienten DAREFMax erlaubt sind, solange AREF noch unterhalb von 7/8 AREFGrz liegt und zwischen 7/8 AREFGrz und 9/8 AREFGrz eine lineare Abnahme von DAREFMax von 0.7 m/s^3 auf 0.3 erfolgt. Für AREF > 9/8 AREFGrz bleibt der minimale Wert 0.3 m/s^3 erhalten:
DAREFMax = unendlich für AREF < 7/8 AREFGrz
DAREFMax = 0.7 m/s^3 - K1 * (AREF - 7/8 AREFGrz) für 7/8 AREFGrz < 9/8 AREFGrz
DAREFMax = 0.3 m/s^3 für AREF > 9/8 AREFGrz

Zusätzlich kann die Druckreduzierungsfunktion auch noch abhängig von der erreichten Fahrzeuggeschwindigkeit VREF berechnet werden, da bei hohen Geschwindigkeiten aufgrund des großen Luftwiderstands grundsätzlich eine geringere Abhebetendenz festzustellen ist, als bei kleinen Geschwindigkeiten.

In Figur 4 ist eine Möglichkeit dargestellt, VREF als Parameter für eine Schar von Funktionen zu verwenden. Beispielsweise kann die Grundfunktion additiv mit einem VREF-abhängigen Term überlagert werden:
DAREFMax = unendlich für AREF < 7/8 AREFGrz
DAREFMax = 0.7 m/s^3 - K1 * (AREF - 7/8 AREFGrz) + K2 * VREF
für 7/8 AREFGrz < AREF < 9/8
AREFGrz
DAREFMax = 0.3 m/s^3 + K2 * VREF für AREF > 9/8
AREFGrz

### Realisierung des Abhebe-Verhinderers

Damit der erfindungsgemäße Regel-Mechanismus wirkungsvoll arbeiten kann, wird eine relativ exakte Information über die jeweils aktuelle Fahrzeugverzögerung benötigt.

Diese könnte beispielsweise durch Beschleunigungsgeber gewonnen werden, die dann zusätzlich als Hardware-Einrichtungen vorzusehen wären.

Wie praktische Untersuchungen gezeigt haben, genügt aber auch eine rechnerisch bestimmte Fahrzeugreferenzverzögerung AREF. Die Gewinnung von AREF ist durch Ableitung der berechneten Fahrzeugreferenzgeschwindigkeit VREF möglich, wobei auch noch eine Filterung erfolgen sollte, da wegen der kurzen Abtastzeiten (die Regelungszykluszeit beträgt beispielsweise 8 ms) starke Verzögerungsschwankungen durch Jitter in VREF auftreten können.

VREF wird wiederum aus den einzigen real meßbaren Größen, den Radumfangsgeschwindigkeiten VO und V1, ebenfalls durch Filterung und Extrapolation bestimmt.

Die Gewinnung von VREF und AREF stellt ein Standardproblem für jeden guten ABS-Regler dar, um Unterbremsungszustände während einer Regelbremsung zu vermeiden. Es soll an dieser Stelle lediglich darauf hingewiesen werden, daß sich die Bestimmung von VREF bei abhebegefährdeten Fahrzeugen stark an der Umfangsgeschwindigkeit des Vorderrades orientieren muß, damit die unsichere Hinterradgeschwindigkeit nicht zu Referenzverfälschungen führt, die das Erkennen von Abhebezuständen unmöglich machen würden.

Bei der Filterung zur Bestimmung von VREF und AREF ist generell darauf zu achten, daß die Größen nicht jede kurzzeitige Änderung in den Radgeschwindigkeiten widerspiegeln, jedoch andererseits eindeutige Tendenzen bei einer Veränderung der Fahrzeugverzögerung möglichst verzugsfrei zum Ausdruck bringen.

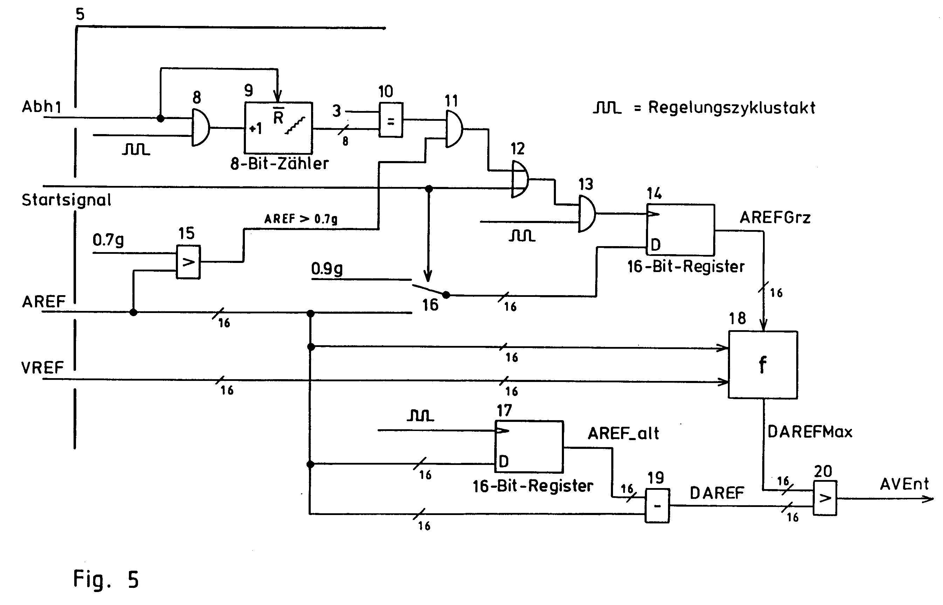

Figur 5 zeigt eine Realisierung des Abhebe-Verhinderers. Über einen 16-Bit-Multiplexer 16 wird außerhalb der ABS-Regelung ein Startwert von 0.9 g für AREFGrz in das 16-Bit-Register 14 eingespeichert. Dies geschieht mit Hilfe des Steuersignals 'Startsignal', das genau bei Eintritt in die Regelung für einen Regelungszyklus '1' wird und somit den konstanten Wert 0.9 g auf die Dateneingänge des Registers 14 legt. Gleichzeitig schaltet 'Startsignal' das ODER-Gatter 12 durch und öffnet damit die Torschaltung (UND-Gatter) 13, so daß der Regelungszyklustakt einen Taktimpuls am Takteingang des Registers 14 erzeugt, so daß der Startwert 0.9 g in das Register übernommen wird. Dieser Startwert gilt also für den Beginn einer jeden neuen ABS-Bremsung als Initialwert von AREFGrz, da zu diesem Zeitpunkt noch keine reale Abhebeverzögerung vorliegt. Die Werte früherer Bremsungen werden bewußt nicht gemerkt, da sich der Beladungszustand des Fahrzeugs und die Fahrbahnverhältnisse seit der letzten ABS-Bremsung stark geändert haben können. Lediglich innerhalb einer Bremsung geht man davon aus, daß diese Verhältnisse weitgehend konstant bleiben.

Damit liegt zu Beginn der ABS-Regelung ein Startwert für AREFGrz vor, der fahrzeugspezifisch gewählt werden kann und aus gewissen mittleren Erfahrungswerten resultiert. Für ein Fahrzeug, das bei üblichem Beladungszustand bereits bei kleineren Verzögerungen zum Abheben neigt, wird der Startwert für AREFGrz entsprechend kleiner gewählt.

Wenn nun während der Regelung ein Abhebefall auftritt, so liefert der Abhebe-Erkennungsmechanismus nach DE-A-4.134.675 ein Signal Abh1, das über das UND-Gatter 8 einen 8-Bit-Zähler 9 ansteuert.

Mit jedem Regelungszyklustakt wird der Zähler um 1 erhöht, wenn Abh1 eine logische '1' liefert. Falls Abh1 '0' wird, erfolgt sofort ein Zurücksetzen des Zählers auf den Wert 0.

Wenn der Abhebemechanismus in drei aufeinanderfolgenden Regelungszyklen Abheben erkennt, das Signal Abh1 also 3 Zyklen lang auf '1' steht, so erreicht der Zähler 9 den Stand 3. Der Vergleicher 10 schaltet dann eine logische '1' auf seinen Ausgang.

Wenn gleichzeitig die Fahrzeugreferenzverzögerung AREF den Schwellwert 0.7 g (AREFGrz_Min) überschreitet, so liefert auch der Vergleicher 15 eine logische '1', so daß das UND-Gatter 11 und das ODER-Gatter 12 durchschalten. Der nächste Regelungszyklustakt erzeugt dann einen Taktimpuls am 16-Bit-Register 14, so daß der aktuelle Wert von AREF als neuer Fahrzeugverzögerungswert AREFGrz abgelegt wird, bei dem das Fahrzeug real zum Abheben neigt.

Somit wird der ursprünglich angenommene Startwert von AREFGrz nun gemäß den wirklich vorliegenden Verhältnissen korrigiert. Dieser Wert ist nun solange als Referenzwert relevant, bis innerhalb der ABS-Bremsung trotz versuchter Abhebeverhinderung ein erneutes Abheben auftritt. Spätestens bei der nächsten ABS-Regelung wird wieder der konstante Startweg (hier 0.9 g) als AREFGrz, geladen. Der Wert von AREFGrz geht selbstverständlich ebenfalls bei Ausschalten der Zündung des Fahrzeugs verloren.

Der Funktionsgenerator 18 ermittelt laufend in Abhänigkeit der aktuellen Fahrzeugreferenzverzögerung AREF, des Abhebewerts AREFGrz und der aktuellen Fahrzeugreferenzgeschwindigkeit VREF eine gerade noch zulässige Zunahme der Fahrzeugreferenzverzögerung DAREFMax gemäß der oben beschriebenen Funktion (s. Figur 4).

Die tatsächlich vorliegende Zunahme der Fahrzeugreferenzverzögerung DAREF errechnet der Subtrahierer 19 aus dem aktuellen Verzögerungswert AREF und dem durch das 16-Bit-Register 17 festgehaltenen Verzögerungswert AREF_alt des vorherigen Regelungszyklus.

Durch den 16-Bit-Komparator 20 erfolgt ein Vergleich zwischen DAREF und dem tolerierbaren Maximalwert DAREFMax.

Überschreitet DAREF den Wert von DAREFMax, so erzeugt der Komparator 20 eine logische '1' an seinem Ausgang und teilt dem ABS-Regler durch dieses Steuersignal AVEnt mit, daß eine Druckreduzierung am Vorderrad um einen kleinen (konstanten) Betrag erfolgen muß.

Für DAREF < DAREFMax zeigt der Komparator 20 dem ABS-Regler durch eine logische 'O' an, daß der normale Druckaufbau fortgesetzt werden kann.

Das Prinzip der feinen Druckreduzierung und des vorsichtigen Druckaufbaus in der Belastungsphase kann besonders gut durch ABS-Druckmodulatoren verwirklicht werden, die nach dem Plunger-Prinzip arbeiten, da der druckeinstellende Kolben sehr exakt auf gewünschte Wegstellungen positioniert werden kann (s. dazu DE-OS 35 30 280).

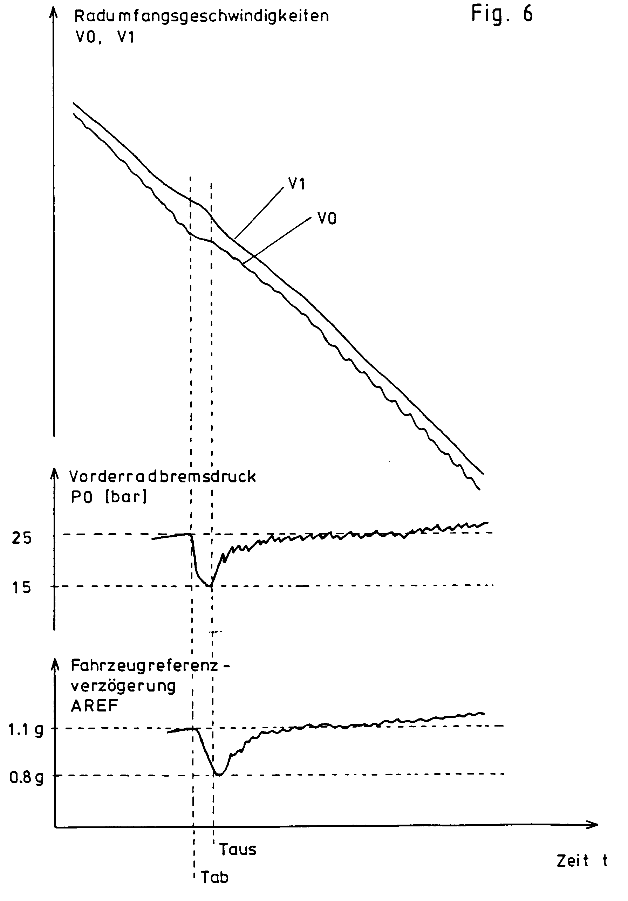

Das Diagramm in Figur 6 zeigt eine typische Regelbremsung eines abhebegefährdeten Fahrzeugs. Über Radblockiertendenzen wird die Regelung ursprünglich aktiviert. Dann tritt ein Abhebefall ein, der mit dem in P 41 34 675.0 beschriebenen Mechanismus ausgeregelt wird. Durch das Merken des zugehörigen Fahrzeug-Verzögerungspunktes und die oben beschriebene Gradientenbeschränkung der Verzögerung kann hier ein weiteres Abheben gänzlich vermieden werden, ohne daß eine Verzögerungseinbuße in Kauf genommen werden muß.

Der Verzögerungsendwert kurz vor dem Stillstand des Fahrzeugs liegt wesentlich höher als der zuvor beim Abheben erreichte Wert. Die gute Verzögerungsausnutzung wird also prinzipiell dadurch erreicht, daß nach dem Ausregeln eines erkannten Abhebers durch den Abhebemechanismus sofort eine steile Druckanfahrt bewirkt wird (s. DE-A-4.134.675), die aber durch den Abhebeverhinderer kurzzeitig unterbrochen werden kann, falls dieser feststellt, daß die Fahrzeugreferenzverzögerung AREF dramatisch ansteigt. Auf diese Weise wird schnell ein guter Druckpunkt erreicht, ohne daß der Vorderradreifen zu früh (bei noch ausgefederter Vorderradgabel) einen zu starken Kraftschluß mit dem Boden eingehen kann. Jedesmal, wenn sich ein zu hektisches 'Verkrallen' des Reifens mit dem Boden anbahnt, was zum Kippen des Fahrzeugs führen könnte, detektiert der Abhebeverhinderer die große Zunahme von AREF und entlastet kurzzeitig den Vorderraddruck.

Dadurch, daß der Abhebeverhinderer erst im real gemessenen Abhebeverzögerungspunkt aktiv wird, stellt sich das System sehr flexibel auf den tatsächlichen Beladungszustand des Motorrads ein. Bei tiefer Schwerpunktlage darf die Zunahme der Fahrzeugverzögerung auch dann groß sein, wenn bereits eine hohe absolute Verzögerung vorliegt. Bei hoher Schwerpunktlage (Soziusbetrieb etc.) wird sich der Abhebeverhinderer schon bei kleineren Fahrzeugverzögerungen einschalten und die Zunahme der Verzögerung frühzeitig dämpfen.

Wie Figur 6 zeigt, tritt am Ende der Bremsung bei hohem AREF ein leichtes Jittern an der Vorderradgeschwindigkeit VO auf. Dies deutet darauf hin, daß sich der Radbremsschlupf im Bereich der Schlupfkuppe befindet und durch die vorsichtige Art der Druckanfahrt dort lange Zeit gehalten werden kann.

Der Abhebeverhinderer wirkt somit auch unterstützend für den ABS-Regler, da auch in bezug auf die Vermeidung von Radblockiervorgängen ein optimaler Druckverlauf erzielt wird. Der Abhebe-Verhinderer kann daher vor allem auf gut haftenden Fahrbahnen dafür sorgen, daß Radgeschwindigkeitseinbrücke vor allem im unteren Geschwindigkeitsbereich schon im Ansatz erkannt und ganz unterdrückt werden, was besonders bei Verwendung von Sportreifen mit stark ausgeprägten µ-Schlupfkurven-Maxima von Bedeutung ist.

Eine Erweiterung des Abhebeverhinderers besteht dann darin, daß nicht nur die Abhebeverzögerung als AREFGrz gemerkt wird, sondern alternativ auch die Fahrzeugreferenzverzögerung AREF, die bei einem Geschwindigkeltseinbruch des Vorderrades aufgetreten ist.

## Patentansprüche

1. Verfahren zur Bremskraftregelung von Motorrädern, wobei die Radumfangegeschwindigkeiten von Sensoren erfaßt und von einem Mikroprozessor ausgewertet werden, der ein Blockiersignal an einen Druckmodulator gibt, wenn bestimmte Verzögerungsgrenzwerte über- oder unterschritten werden und wenn innerhalb einer vorgegebenen Zeit ein die Bodenhaftung des Hinterrades symbolisierendes Abhebesignal nicht auftritt, woraufhin der Druckmodulator den Druck im vorderen Bremskreis reduziert, wobei das Abhebesignal gegeben wird, wenn
a. die Fahrzeugverzögerung einen vorgegebenen Maximalbetrag überschreitet und
- die Hinterradgeschwindigkeit um einen Mindestbetrag größer ist als die Vorderradgeschwindigkeit und
- bei nicht gebremstem Hinterrad die Hinterradverzögerung einen Minimalbetrag unterschreitet
oder
b. die Fahrzeugverzögerung einen Maximalbetrag überschreitet und bei gebremstem Hinterrad
ein Hinterradeinbruch in einer vorgegebenen Zeit trotz Druckreduzierung nicht ausgeregelt wird
oder
c. die Fahrzeugverzögerung einen Maximalbetrag überschreitet und
ein flacher Hinterradeinbruch ohne hinreichende Radbeschleunigung beendet wurde,
wobei vorgesehen ist, daß der Fahrzeugverzögerungswert, welcher bei aufgetretenem Abhebesignal gemessen wurde, als fahrzeugbeladungsspezifischer optimaler Verzögerungspunkt angesehen und als Verzögerungsgrenzwert AREFGrz gespeichert wird, daß dieser Referenzpunkt bei weiteren Bremsungen während der Fahrt an geänderte Verhältnisse adaptiert wird und daß der Bremsdruck des Vorderrades in der Wiederbelastungsphase immer dann reduziert wird, wenn der gemerkte Verzögerungsgrenzwert AREFGrz wieder annähernd erreicht oder überschritten ist und die Zunahme der Fahrzeugverzögerung DAREF einen zulässigen Höchstwert DAREFMax überschreitet, der in Abhängigkeit der erreichten Fahrzeugverzögerung AREF, der Fahrzeugreferenzgeschwindigkeit VREF und des Verzögerungsgrenzwertes AREFGrz gebildet wird.

2. Verfahren zur Bremskraftregelung von Motorrädern nach Anspruch 1, dadurch gekennzeichnet, daß zusätzlich zu den Abhebesignalen die vom ABS erzeugten Signale wie z.B. Radgeschwindigkeiten, gefilterte Radgeschwindigkeiten, Radverzögerungen, gefilterte Radverzögerungen, Fahrzeugreferenzgeschwindigkeit, Fahrzeugreferenzverzögerungen, Drucksignale bzw. druckproportionale Signale sowie reglerinterne Statussignale, etc. mitgenutzt werden.

3. Verfahren zur Bremskraftregelung von Motorrädern nach Anspruch 1, dadurch gekennzeichnet, daß ein Standard-ABS-Regler durch diesen Mechanismus zur Ansteuerung des mechanisch/pneumatischen Druckstellers genutzt wird, indem der Mechanismus Steuersignale zum Druckabbau an den ABS-Regler übergibt.

4. Verfahren zur Bremskraftregelung von Motorrädern nach Anspruch 1, dadurch gekennzeichnet, daß ein Standard-ABS-Regler durch diesen Mechanismus ergänzt wird, so daß während einer ABS-Regelbremsung ein Abheben des gebremsten Fahrzeugs verhindert wird.

5. Verfahren zur Bremskraftregelung von Motorrädern nach Anspruch 1, **dadurch gekennzeichnet**, daß ein Standard-ABS-Regler durch diesen Mechanismus unterstützt wird, indem durch die kontrollierte Anfahrt des optimalen Fahrzeugverzögerungspunkts die Blockiertendenz des Vorderrads zumindest auf sehr gut haftenden Fahrbahnen stark reduziert und ein optimales Druckniveau über lange Zeiträume gehalten wird, wobei nicht nur die Abhebeverzögerung als AREFGrz gemerkt wird, sondern alternativ auch die Fahrzeugreferenzverzögerung AREF, die bei einem Geschwindigkeitseinbruch des Vorderrads aufgetreten ist.

6. Verfahren zur Bremskraftregelung von Motorrädern nach Anspruch 1, dadurch gekennzeichnet, daß der Mechanismus auf einem Mikro-Controller implementiert ist.

7. Verfahren zur Bremskraftregelung von Motorrädern nach Anspruch 6, dadurch gekennzeichnet, daß die Implementierung auf dem ABS-Controller erfolgt.

## Claims

1. Method of regulating the braking force of motor cycles, wherein the wheel peripheral speeds are detected by sensors and evaluated by a microprocessor, which supplies a blocking signal to a pressure modulator when the deceleration is above or below specific limiting values and when, within a predetermined period, a lift-off signal symbolizing the road grip of the rear wheel does not occur, whereupon the pressure modulator reduces the pressure in the front brake circuit, wherein the lift-off signal is emitted when
a. the vehicle deceleration exceeds a predetermined maximum value and
- the rear wheel speed is greater, by a minimum amount, than the front wheel speed and
- with the rear wheel not braked, the rear wheel deceleration falls below a minimum value
or
b. the vehicle deceleration exceeds a maximum value and, with the rear wheel braked,
a rear wheel failure is not stabilized within a predetermined time in spite of pressure reduction
or
c. the vehicle deceleration exceeds a maximum value and
a flat rear wheel failure has been terminated without sufficient wheel acceleration,
wherein it is provided that the vehicle deceleration value which was measured when the lift-off signal occured, is regarded as vehicle loading-specific optimum deceleration point and is stored as deceleration limiting value AREFGrz, that this reference point is adapted in further brakings during travel to changed conditions and that the brake pressure of the front wheel is always reduced in the reloading phase when the deceleration value again approximately reaches or exceeds the noted limiting value AREFGrz and the increase in the vehicle deceleration DAREF exceeds an admissible maximum value DAREFMax, which is formed as a function of the achieved vehicle deceleration AREF, the vehicle reference speed VREF and the deceleration limiting value AREFGrz.

2. Method of regulating the braking force of motor cycles according to claim 1, characterized in that, in addition to the lift-off signals, the signal generated by the ABS, such as wheel speeds, filtered wheel speeds, wheel decelerations, filtered wheel decelerations, vehicle reference speed, vehicle reference decelerations, pressure signals and pressure-proportional signals and also status signals internal to the regulator, etc. are also used.

3. Method of regulating the braking force of motor cycles according to claim 1, characterized in that a standard ABS regulator is used by this mechanism for governing the mechanical/pneumatic pressure setter, in that the mechanism supplies control signals for building up the pressure to the ABS regulator.

4. Method of regulating the braking force of motor cycles according to claim 1, characterized in that a standard ABS regulator is supplemented by this mechanism so that, during an ABS regulated braking, a lifting-off of the braked vehicle is prevented.

5. Method of regulating the braking force of motor cycles according to claim 1, characterized in that a standard ABS regulator is supported by this mechanism in that, by the controlled start-up of the optimum vehicle deceleration point, the blocking tendency of the front wheel is greatly reduced at least on tracks with very good road grip and an optimum pressure level is maintained over long periods, wherein not only the lift-off deceleration is noted as AREFGrz, but alternatively the vehicle reference deceleration AREF, which has occured in the case of a speed failure of the front wheel.

6. Method of regulating the braking force of motor cycles according to claim 1, characterized in that the mechanism is implemented on a microregulator.

7. Method of regulating the braking force of motor cycles according to claim 6, characterized in that the implementation is carried out on the ABS regulator.

## Revendications

1. Procédé d'asservissement de la force de freinage de motocyclettes, dans lequel les vitesses circonférentielles des roues sont détectées par des capteurs et analysées par un microprocesseur qui donne un signal de blocage à un modulateur de pression lorsque des valeurs limites de décélération déterminées sont dépassées ou ne sont pas atteintes, et lorsque dans un temps prédéterminé un signal de soulèvement symbolisant l'adhérence au sol de la roue arrière n'apparaît pas, après quoi le modulateur de pression réduit la pression dans le circuit de freinage avant, le signal de soulèvement étant donné lorsque :
a. la décélération du véhicule dépasse un montant maximum prédéterminé, et
- la vitesse de la roue arrière est supérieure à la vitesse de la roue avant d'un montant minimum, et
- la roue arrière n'étant pas freinée, la décélération de la roue arrière n'atteint pas un montant minimum,
ou bien
b. la décélération du véhicule dépasse un montant maximum et, lorsque la roue arrière est freinée,
une chute de vitesse de la roue arrière n'est pas compensée dans un temps prédéterminé malgré la réduction de la pression,
ou encore
c. la décélération du véhicule dépasse un montant maximum, et une chute plate de la vitesse de la roue arrière a été terminée sans accélération suffisante de la roue,
il est prévu que la valeur de décélération du véhicule, qui a été mesurée lorsque le signal de soulèvement est apparu, est considérée comme point de décélération optimum, spécifique de la charge du véhicule et mémorisée comme valeur limite de décélération AREFGrz,
et il est prévu que lors d'autres freinages pendant le roulement, ce point de référence est adapté aux conditions modifiées et que la pression de freinage de la roue avant dans la phase de remise en charge est toujours réduite lorsque la valeur limite de décélération AREFGrz notée est de nouveau approximativement atteinte ou dépassée, et l'accroissement de décélération du véhicule DAREF dépasse une valeur admissible maximum DARFMax qui est établie en fonction de la décélération AREF atteinte, de la vitesse de référence VRED du véhicule et de la valeur limite de décélération AREFGrz.

2. Procédé d'asservissement de la force de freinage de motocyclettes selon la revendication 1, caractérisé en ce qu'en plus des signaux de soulèvement, on exploite en même temps les signaux engendrés par le système d'antiblocage, comme par exemple les vitesses de roues, les vitesses de roues filtrées, les décélérations de roues, les décélérations de roues filtrées, la vitesse de référence du véhicule, les décélérations de référence du véhicule, les signaux de pression et les signaux proportionnels à la pression, respectivement, ainsi que les signaux d'état internes de régulation, etc.

3. Procédé d'asservissement de la force de freinage de motocyclettes selon la revendication 1, caractérisé en ce qu'un régulateur standard du système d'antiblocage est complété par ce mécanisme pour piloter l'organe de réglage de pression mécanique/pneumatique, en ce que le mécanisme transmet des signaux de commande au régulateur du système d'antiblocage pour faire chuter la pression.

4. Procédé d'asservissement de la force de freinage de motocyclettes selon la revendication 1, caractérisé en ce qu'un régulateur standard du système d'antiblocage est complété par ce mécanisme de sorte que pendant un freinage à régulation du système d'antiblocage on empêche que le véhicule freiné se soulève.

5. Procédé d'asservissement de la force de freinage de motocyclettes selon la revendication 1, caractérisé en ce qu'un régulateur standard du système d'antiblocage est assisté par ce mécanisme en réduisant fortement la tendance au blocage de la roue avant, grâce à l'approche contrôlée du point de décélération optimum du véhicule, au moins sur des chaussées à très bonne adhérence, et en maintenant un niveau de pression optimum sur une période prolongée, et on note non seulement la décélération de soulèvement en tant que valeur AREFGrz, mais aussi à titre d'alternative, la décélération de référence du véhicule AREF qui est apparue à la chute de vitesse de la roue avant.

6. Procédé d'asservissement de la force de freinage de motocyclettes selon la revendication 1, caractérisé en ce que le mécanisme est mis en application sur un microcontrôleur.

7. Procédé d'asservissement de la force de freinage de motocyclettes selon la revendication 6, caractérisé en ce que la mise en application a lieu sur un contrôleur de système d'antiblocage.
